# EUROPEAN PATENT APPLICATION

(11) **EP 4 564 624 A1**
(43) Date of publication of application: **04.06.2025**
(21) Application number: 24209253.4
(22) Date of filing: 28.10.2024
(51) Int. Cl.: H02G 3/08, H02G 3/12

(54) **INSTALLATION BOX ASSEMBLY TO SECURE WIRES OF DIFFERENT DIAMETERS**

(30) Priority: 01.12.2023 IN 202331081827
(71) Applicant: SCHNEIDER ELECTRIC INDUSTRIES SAS, 92500 Rueil-Malmaison (FR)
(72) Inventor: QUADRI, Syed Mansur, 560032 BENGALORE (IN)
(74) Representative: Lavoix

(57) **Abstract**

The present invention relates to an installation box assembly (100) configured to provide strain relief and secure wires and conduits of difference diameters. The installation box assembly (100) comprises a casing (102) having sets of radial grooves (108), and an elastic cover member (112) disposed on said casing (102). The radial grooves (108) are disposed in a spaced apart manner on a slanted side walls (106) of said casing (102). The radial grooves (108) of each set are interlaced at their proximal ends to form a teethed receptacle (110) to grip said wires. The elastic cover member (112) comprises plurality of lid portions (116) is provided with plurality of ridges (118) and disposed on each of said set of radial grooves (108) in an air-tight manner. Each tooth of said teethed receptacle (110) has an arcuate profile to facilitate insertion of said wire in an angular manner with respect to said slanted side walls of said casing (102).

## Description

### Field of invention:

The present invention generally relates to wiring accommodation and retention provision for electrical installation boxes accommodating different electrical equipment. More particularly, the present invention relates to an installation box having retention mechanism as a combination of soft and hard materials to facilitate insertion of wires or conduits of different dimensions at different angles.

### Background of the invention:

Installation boxes are equipped to house various electrical devices and equipment and thereupon are installed within a wall, ceiling, or other surface based on their uses and user requirements. In many installation practices, the junction box is installed in a recessed fashion within the surface to provide a flush mount of the fixture against the surface while complying with various industry standards. The standards include dimensions of installation boxes, and their locations for attaching a fixture to the box. Conventionally, installation box includes compartment having an opening at its front portion with mounting tabs projecting across the open front. In buildings having concrete or wooden ceilings and walls are used for mounting attaching electric wiring devices with the installation boxes.

The electrical wires and conduits including electrical power cord that supplies power is required to remain connected to the housing, and is critical to the proper operation of an electronics system. Inadvertent disconnection from the electronics housing can cause system failure. For storage systems, the loss of power can result in data loss, downtime, etc. Previous efforts to accommodate wires and conduits includes devising a cord retention mechanism have used a clip or a flange attached to the electronic device with features designed to grasp and hold a specific style of wire or conduit. It is known in the art to devise a box or other housing having a lid held in place by one or more screws. Within the housing is a connector block which receives the mains wiring. A clamp may be provided to retain the mains cable to prevent it being accidentally pulled free exposing live wires.

It is further known in the art to incorporate rigid structures including holding clamps in the housing as strain relief feature to secure the bending of the wire. The secure positioning of bent portions of the wire in the housing prevents or severely limits relative movement of the portion of the wire in the housing and hence eliminates or minimizes the effects of movement of the wire. In the existing procedure consumes more installation time to cable assembly preparation.

In many installation practices, the boxes are provided with removable circular gaskets typically mounted on the surface to abut the surface surrounding the opening for wire insertion. The gasket prevents the entry of water into the plate opening and into the receptacle contacts or other parts of the installation when the male plug is disconnected and removed from the receptacle and the cover is in its closed position. However, this configuration is specific for a certain diameter of wire, and they do not work nearly as effectively to block external particles including water molecules. Disadvantageously, the circular entry slots provided in the box falls short in providing the adequate retraining force to withstand the push and pull forces on the wire and conduit.

Therefore, prior structure of strain relief is particular to cables, and requires separate component moulded or attached to the housing. Additionally, there exists several strain relief mechanism in the market; however these mechanisms does not provide pertinent holding and gripping of the cables or conduits with proper retraction forces. Further, in existing technique, the knock-out lid present in the installation boxes are required to be removed and when wire or conduits are inserted through the knock-out. This mechanism does not provide protection from external particles and water molecules i.e. there is no any airtight solution for the wire-insertion available in the existing installation boxes. More disadvantageously, to accommodate wire of different dimensions, multiple adapters are required. Therefore, there is a need for installation box with to securely attach wires of different dimension, with holding and gripping features integrated on the installation box.

With a view therefore to overcome the drawbacks associated with conventional systems and mechanisms of providing insertion slots for wire entry inside the installation boxes, the inventors devised a novel installation box assembly having a strain relief insertion mechanism to secure wires of multiple diameters. In the present installation box assembly, the installation box assembly is provided with set of radial grooves forming a teethed receptacle; and together with an elastic cover member, the present invention provides an arcuate and interlaced teethed receptacle with a combination of plastic and elastic material.

### Summary of the invention:

Accordingly, the present invention provides an installation box assembly for securing electrical wires of different diameters. The said installation box assembly comprises:
- a casing having a flat base portion and slanted side walls disposed adjacent to said base portion,
- sets of radial grooves disposed on said slanted side walls of said casing in a spaced apart manner; said radial grooves of each set are interlaced at their proximal ends to form a teethed receptacle to grip said wires, and
- an elastic cover member disposed on said casing.

The elastic cover comprises plurality of arms and a lid portion formed at a distal end of each of said arms. Each of said lid portions is provided with plurality of ridges having complimentary profile with respect to said radial grooves on said casing. The each of the lid portions is disposed on said set of radial grooves in an air-tight manner.

According to one objective of the present invention, each tooth of said teethed receptacle on the casing has an arcuate profile to facilitate insertion of said wire in an angular manner with respect to said slanted side walls of said casing.

Each of said lid portions is provided with radial knock-out portion having a matching profile with said teethed receptacle of said casing for a guided air-tight insertion of said wire into said teethed receptacles in the angular manner.

According to one embodiment of invention, the casing is provided with plurality of channels extending from said base portion to said slanted side walls to receive said plurality of arms of said elastic cover.

According to one embodiment of invention, the lid portions having a diameter matching with the extension of said radial grooves on said casing.

According to one embodiment of invention, the elastic cover member further comprises at least one vertical knock-out covering the corresponding vertical cable entry cut-out on said casing.

According to one embodiment of invention, the cover member is disposed at the base portion of said casing, and said arms of said cover member extending radially about a centre portion of said casing.

According to one embodiment of invention, the set of radial grooves are distributed at a circumference about the centre of the base portion.

According to particular one embodiment of invention, the each of said radial grooves are provided with at least three grooves interlaced at their proximal ends and wherein each of said radial grooves is provided with chamfered cut forming an interface angle at said proximal ends. The number of grooves, without any limitation can be increases to increase the flexibility required at the receptacle and the size of the wires.

According to one embodiment of invention, the interface angle has different slanted profile. Alternatively, each interface angle may have similar slanted profile.

According to one embodiment of invention, the casing is provided with a pair of elongated grooved cuts and claw recess portions disposed at opposite outer surface to accommodate corresponding elongated screw member and screw claws respectively, to mount said installation box assembly.

### Brief description of the drawings:

Figures 1 depict an exploded view of the invented installation box assembly along with mounting provisions according to one embodiment of the invention.
Figure 2 depicts an assembled perspective view of the invented installation box assembly according to one embodiment of the invention.
Figure 3 illustrates an exploded view of the invented installation box assembly showing the elastic cover member according to one embodiment of the invention.
Figure 4 is a top plan view of the elastic cover member according to one embodiment of the invention.
Figure 5 is a tilted close-up view of the lid portion of the elastic cover member as shown in figure 4.

### Detailed description of the drawings:

In the following, numerous specific details are set forth to provide a thorough description of embodiment. Those skilled in the art will recognize and appreciate that, despite of the detailed nature of the exemplary embodiment provided herein; changes and modifications may be applied to said embodiment without limiting or departing from the generally intended scope.

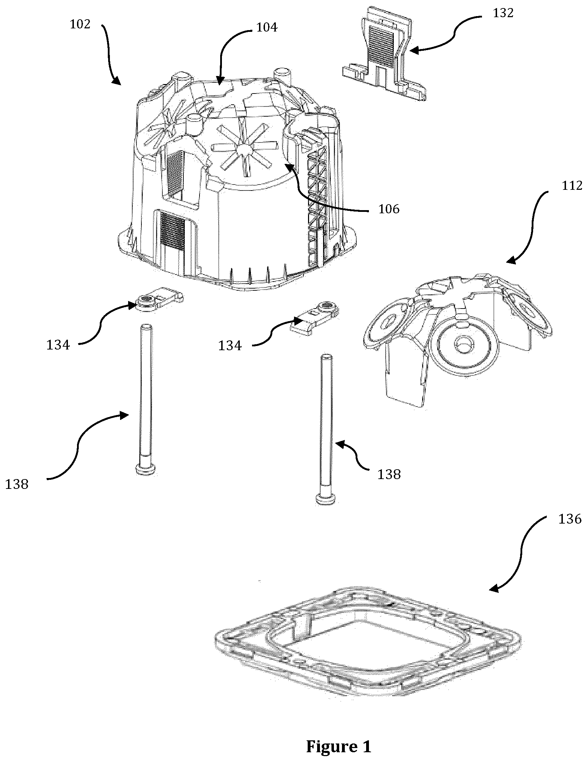

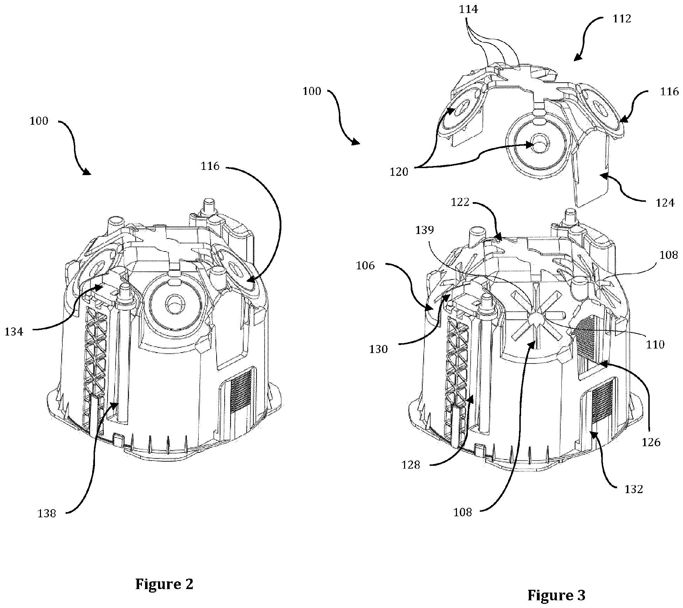

With reference to figure 1, an installation box assembly (100) for securing electrical wires of different diameters is depicted, according to embodiment disclosed herein. The installation box assembly (100) is configured to provide a strain relief as well as secure wires and conduits. The installation box assembly (100) comprises a casing (102) having sets of radial grooves (108), and an elastic cover member (112) disposed on said casing (102). The casing (102), according to one embodiment of the invention, is formed of a rigid material such a plastic, and safeguards electrical devices attached therein. Each set of the radial grooves (108) on the casing (102) forms a teethed receptacle (110). The elastic cover member (112) is formed of soft materials such as SEBS (Styrene Ethylene Butylene Styrene). The wire is first inserted through the elastic cover member (112), and thereupon it is received by said teethed receptacle (110). The installation box assembly (100), as shown in figure 2, thus provides a bi-material gripping feature which holds cable and conduit upon entries.

The installation box assembly (100), as shown in figures 1-3, the casing (102) is provided with a pair of elongated grooved cuts (128) running at an outer surface of the casing. The elongated grooved cuts (128), according to one embodiment are disposed at two opposite surfaces of said casing (102). Further, a claw recess portion (130) is provided at one end portion of each of said grooved cuts (128). An elongated screw member (138) is disposed through each of the elongated grooved cuts (128). A pair of screw claws (134) are inserted through one end of each of the elongated screw member (138) and configured to be movable in and out from the claw recess portion (130) in a rotatable manner. The screw claws (134) are tightened and brought out of the claw recess portion (130), and implemented to mount the installation box assembly (100) along with a fixing frame (136).

As shown in figure 3, the set of radial grooves (108) are disposed in a spaced apart manner on a slanted side walls (106) of said casing (102). In a preferred embodiment of the invention, the radial grooves (108) are disposed in a manner where each of the sated side walls (106) get one set of radial grooves (108). The radial grooves (108) are arranged as cuts or slits that exude outward from the teethed receptacle (110). These radial grooves (108) form a hard angular slit pattern feature, which serves a functional purpose. Each of the radial grooves (108) is further provided with an arcuate profile at both of its ends.

Each pair of adjacent radial grooves (108) of each set are interlaced at their proximal ends. A teethed pattern is thus formed where the primal ends of the radial grooves (108) nearly converges and forms a teethed receptacle (110) to grip said wire. Instead of each groove extending independently, in the presently invented installation box assembly (100), the grooves (108) come together in a manner that creates an interlaced or woven appeared about its proximal or central area where said teethed receptacle (110) is formed. Functionally, the interlacing provides a structural stability and improved gripping of the teethed receptacle (110) while providing a dynamic expanding and retracting of the receptacle (110).

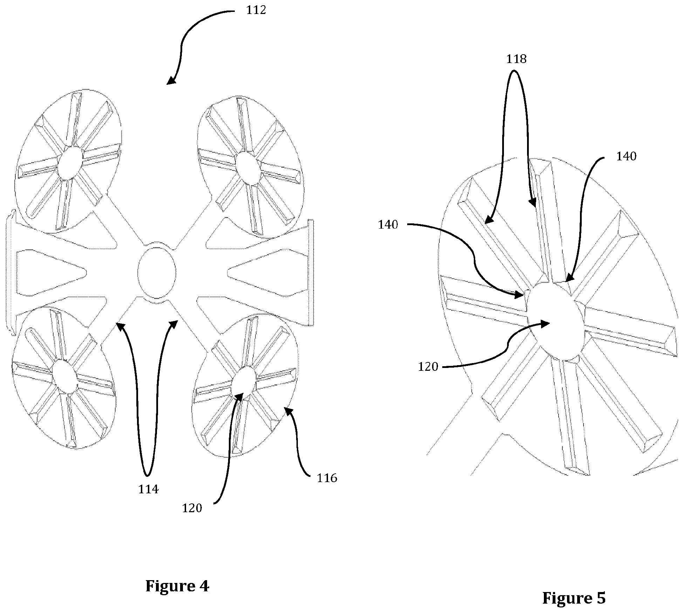

The elastic cover member (112), as seen in figure 4 comprises plurality of arms (114) extending from a central portion. Each of the arms (114) on the elastic cover member (112) includes a lid portions (116) provided with plurality of ridges (118). The elastic cover member (112) may be formed of a soft rubber composite having a skeleton profile as the lid portions (116) are formed at a distal end of the arms (114). Each of the lid portion (116) is provided with knock-out portion (120) through which the wires and the conduits are inserted by tearing. As the wire is inserted through the knock-out portion (120), an air tight combination is formed and soft-material gripping feature is provided.

With reference to figure 3, each of the each of the lid portion (116) is disposed on each of said set of radial grooves (108) in an air-tight manner. Thus, the length of the arms (114) is selected depending on the positioning of the radial grooves (108). The casing (102) is provided with plurality of channels (122) extending from said base portion (104) to said slanted side walls (106) of the casing (102). The channels (122) receive said plurality of arms (114) of said elastic cover member (112). The casing (102) of the installation box assembly (100) is provided with a vertical cable entry cut-out (126). The elastic cover member (112) further comprises at least one vertical knock-out (124) covering the corresponding vertical cable entry cut-out (126) on said casing (102). Further, as seen in figure 1, at least one screw towers (132) is provided to close another insertion slot at a bottom outer surface of the casing (102).

In a preferred embodiment of the invention, the sets of radial grooves (108) are distributed symmetrically about the base portion (104) of the casing (102). More specifically, set of radial grooves (108) are distributed at a circumference about the centre of the base portion. Accordingly, the arms (114) of elastic cover member (112) have a spherical distribution about the base portion (104) of the casing (102). Lid portions (116) have a diameter matching with the extension of said radial grooves (108) on said casing (102) so that the teethed receptacles (110) can be covered from outside dust or water. The ridges (118) are formed with complimentary profile with respect to said radial grooves (108) on said casing (102). The soft ridges (118) gets fixed within set of radial grooves (108) disposed on the casing (102) in an air-tight manner.

Each tooth of said teethed receptacle (110), as seen in figure 4, has an arcuate profile to facilitate insertion of said wire in an angular manner with respect to said slanted side walls (106) of said casing (102). The arcuate profiles along with the interlacing give a slanted three-interlaced arc teeth with angular cut at the teethed receptacle (110). The angular cut i.e. the chamfered cuts (139) may be varied with respect of the slanted side walls (106) of the casing to facilitate an angular insertion of the wires and conduits. The radial grooves (108) on the casing comprises at least three grooves that are interlaced together to form an insertion receptacle with three teethed portion.

The insertion receptacle is also provided with chamfered cuts (139) forming the interface angle at the proximal ends. These chamfered cuts (139) form an interface angle of the insertion of the wire into the casing (102). The interface angle in each of the chamfered cuts (139) may be different with respect to each other to cover various type of insertion angle of the wire or conduits. Alternatively, interface angle in each of the chamfered cuts (139) may be same for each of them. Further, other embodiment of the teethed receptacle may comprise 4, 5, 6 or 7 radial grooves forming equal numbers of teeth forming the receptacle.

The insertion of wire or conduits, without any limitation includes side entry, angular bottom entry, and angular bottom entry as required in the installation site. In addition to a particular dimension of cables and conduits, angular insertion of different shapes of other accessories can be taken care of, with the invented concept of installation box assembly (100) having bi-material combination of forming a teethed receptacle (110) and plurality of ridges (118) having the chamfered cut (140).

The radial knock-out portion (120) has matching dimension with the teethed receptacle (110). Further, with reference to figure 5 of the accompanying figures, each of the plurality of ridges (118) of the lid portion (116) are radially extended from the radial knock-out portion (120). Each of the ridges (118) is provided with chamfered cut (140) at their extreme ends. As the radial knock-out portions (120) are removed, the chamfered cuts (140) on the proximal ends of the ridges (118) guides the wires to the teethed receptacle (110) in an angular manner. The angular entry of the wires and conduits includes a vertical insertion with respect of the wall of the casing (102). The arcuate profile interlaced teethed receptacle (110) and the chamfered cut on the elastic cover member (112) makes sure that same gripping force is provided for multi-directional entry of wires and conduits.

The combination of bi-material combination of forming a teethed receptacle (110) and plurality of ridges (118) having the chamfered cut (140), stretches and expands in a reversible manner and provides an air-tight strain-relief to the wires and conduits. The soft rubber elastic cover member (112) helps to bring the plastic teethed receptacle (110) to its original position and brings mechanical advantage to hold different diameter of wire in-line with specific countries need. With this invented installation box assembly (100), performance of the conduit and cable entries are better in terms of quick installation and easy to use, gripping capabilities, multi-diameter holding capabilities (bigger to small and smaller to bigger) holding the pull-out strength requirements.

As the cable or conduit enters the installation box assembly (100), initially the radial knock-out portion of the soft material elastic cover member (112) is torn and grip the cable or conduit in an air tight manner. As the wire is further inserted, the chamfered cuts (140) guides the wire towards the teethed receptacle (110). The hard-material interlaced teethed receptacle (110) receives the wire and expands in an inwards direction towards the cavity of the casing (102). Accordingly, the internal surfaces of the entry slot of the soft and hard material will expand, and the external surfaces will contract; and thus the wire is kept in place within the teethed receptacle (110). The teethed receptacle (110) hold the wires tightly in any angular direction towards the cavity of the casing to get ready for wiring device installation. In addition to facilitate angular insertion, the angular interlaced radial grooves (108) of the invented installation box assembly (100) allows the inserted wire to be rotated in an intended manner.

Furthermore, in the present invention, the combination of materials may be configured with tri or multi-material combination producing variations in the type of external and internal compression and expansion ratios of materials in the conduit entries through the materials. The softer materials provide a new and high degree of IP water and dust classes.

As already mentioned, the foregoing description is illustrative of the invention and not limitative to its scope, because it will be apparent to persons skilled in the art to devise other alternative embodiments without departing from the broad ambit of the disclosures made herein.

**Part-List:**

| | | | |
|---|---|---|---|
| Installation box assembly | 100 | Chamfered cuts | 139, 140 |
| Casing | 102 | | |
| Base portion | 104 | | |
| Slanted side walls | 106 | | |
| Radial grooves | 108 | | |
| Teethed receptacle | 110 | | |
| Elastic cover member | 112 | | |
| Plurality of arms | 114 | | |
| Lid portion | 116 | | |
| Plurality of ridges | 118 | | |
| Radial knock-out portion | 120 | | |
| Plurality of channels (on box) | 122 | | |
| Vertical knock-out | 124 | | |
| Vertical cable entry cut-out | 126 | | |
| Elongated grooved cuts | 128 | | |
| Claw recess portions | 130 | | |
| Screw towers | 132 | | |
| Screw claws | 134 | | |
| Fixing frame | 136 | | |
| Elongated screw member | 138 | | |

## Claims

1. An installation box assembly (100) for securing electrical wires of different diameters, said installation box assembly (100) comprising:
- a casing (102) having a flat base portion (104) and slanted side walls (106) disposed adjacent to said base portion (104),
- sets of radial grooves (108) disposed on said slanted side walls (106) of said casing (102) in a spaced apart manner; said radial grooves (108) of each set are interlaced at their proximal ends to form a teethed receptacle (110) to grip said wires, and
- an elastic cover member (112) disposed on said casing (102) comprising plurality of arms (114) and a lid portion (116) formed at a distal end of each of said arms (114); wherein each of said lid portions (116) is provided with plurality of ridges (118) having complimentary profile with respect to said radial grooves (108) on said casing (102) and disposed on each of said set of radial grooves (108) in an air-tight manner,
wherein each tooth of said teethed receptacle (110) has an arcuate profile to facilitate insertion of said wire in an angular manner with respect to said slanted side walls (106) of said casing (102), and
wherein each of said lid portions (116) is provided with radial knock-out portion (120) having a matching profile with said teethed receptacle (110) of said casing (102) for a guided air-tight insertion of said wire into said teethed receptacles (110).

2. The installation box assembly (100) to secure wires of different diameters as claimed in claim 1, wherein said casing (102) is provided with plurality of channels (122) extending from said base portion (104) to said slanted side walls (106) to receive said plurality of arms (114) of said elastic cover member (112).

3. The installation box assembly (100) to secure wires of different diameters as claimed in any one of the claims 1 to 2, wherein said lid portions (116) having a diameter matching with the extension of said radial grooves (108) on said casing (102).

4. The installation box assembly (100) to secure wires of different diameters as claimed in any one of the claims 1 to 3, wherein said elastic cover member (112) further comprises at least one vertical knock-out (124) covering the corresponding vertical cable entry cut-out (126) on said casing (102).

5. The installation box assembly (100) to secure wires of different diameters as claimed in any one of the claims 1 to 4, wherein the elastic cover member (112) is disposed at the base portion (104) of said casing (102), and said arms (114) of said cover member (112) extending radially about a centre portion of said casing (102).

6. The installation box assembly (100) to secure wires of different diameters as claimed in any one of the claims 1 to 5, wherein said set of radial grooves (108) are distributed at a circumference about the centre of the base portion (104).

7. The installation box assembly to secure wires of different diameters as claimed in any one of the claims 1 to 6, wherein each of said radial grooves (108) are provided with at least three grooves, interlaced at their proximal ends, and wherein each of said radial grooves (108) is provided with chamfered cut (139) forming an interface angle at said proximal ends.

8. The installation box assembly to secure wires of different diameters as claimed in claim 7, wherein said interface angle have different slanted profiles.

9. The installation box assembly to secure wires of different diameters as claimed in claim 7, wherein each interface angle have similar slanted profile.

10. The installation box assembly to secure wires of different diameters as claimed in any one of the claims 1 to 9, wherein said casing (102) is provided with a pair of elongated grooved cuts (1258) and claw recess portions (130) disposed at opposite outer surface to accommodate corresponding elongated screw member (138) and screw claws (134) respectively, to mount said installation box assembly (100).
